# EUROPÄISCHE PATENTSCHRIFT

(11) **EP 0 782 499 B1**
(45) Veröffentlichungstag und Bekanntmachung des Hinweises auf die Patenterteilung: **24.11.1999**
(21) Anmeldenummer: 96916147.0
(22) Anmeldetag: 22.05.1996
(51) Int. Cl.: B29C 55/20, D06C 3/04

(54) **MAGNETISCHE KLUPPENHEBEL-BETÄTIGUNGSVORRICHTUNG**
MAGNETIC DEVICE FOR ACTUATING A CLIP LEVER
DISPOSITIF D'ACTIONNEMENT MAGNETIQUE DE LEVIERS DE PINCES

(30) Priorität: 24.05.1995 DE 19519095
(43) Veröffentlichungstag der Anmeldung: 09.07.1997
(73) Patentinhaber: Brückner Maschinenbau GmbH, 83313 Siegsdorf (DE)
(72) Erfinder: BREIL, Jürgen, D-83355 Grabenstätt (DE); LINDNER, Paul, A-5302 Henndorf (AT); SIEBER, Bernd, D-01307 Dresden (DE)
(74) Vertreter: Flach, Dieter Rolf Paul, Dipl.-Phys.
(86) Internationale Anmeldenummer: EP9602190
(87) Internationale Veröffentlichungsnummer: WO9637358

(56) Entgegenhaltungen:
- EP-A- 0 410 494
- DE-B- 1 114 460
- GB-A- 2 159 186
- GB-A- 2 194 563
- US-A- 3 054 159
- US-A- 3 180 002

## Beschreibung

Die Erfindung betrifft eine magnetische Kluppenhebel-Betätigungsvorrichtung nach dem Oberbegriff des Anspruches 1.

Kluppenhebel-Betätigungsvorrichtungen, d.h. sog. Kluppenöffner/-schließer, werden in Transportvorrichtungen für bewegte Materialbahnen, insbesondere in Reckanlagen für Kunststoff-Folienbahnen verwendet.

Bei der Kunststoffolien-Herstellung sind sowohl Quer-, Längs- als auch Simultanreckanlagen bekannt, wobei die Materialbahn an den gegenüberliegenden Außenrändern erfaßt und an verfahrbaren Kluppen eingespannt gehalten wird. Üblicherweise wird von Kluppen oder Kluppenwagen gesprochen, an welchen verschwenkbare Kluppenhebel sitzen, die den Rand der Materialbahn gegenüber einem Kluppentisch eingespannt halten.

Im Bereich der Einspannstelle müssen die Kluppenhebel geschlossen und am Ende der Transport-Vorrichtung, insbesondere der Reckanlage, wieder geöffnet werden.

Es sind dazu seit jeher mechanische Öffner- und Schließsysteme bekannt, bei welchen der Kluppenhebel an eine Schiene anschlägt und jeweils in Öffnungs- bzw. Verschlußrichtung umgelegt wird. Derartige Systeme unterliegen einem hohen Verschleiß. Vor allem nachteilig ist auch der abrupte Beginn der Öffnungs- oder Schließbewegung sowie das ungedämpfte Ende der Kippbewegung der nachfolgend auch als Messerklappen bezeichneten Kluppenhebel, die voll gegen die jeweils vorgesehenen Anschläge schlagen.

Von daher sind bereits magnetische Kluppenhebel-Betätigungsvorrichtung vorgeschlagen worden.

Aus der DE-AS 1 114 460 ist eine Maschine zum Behandeln von Gewebebahnen bekannt, deren Steuerorgane zum Verschwenken der Kluppenhebel oder -halter an den betreffenden Abschnitten der Umlaufbahn Magnetschienen umfassen. Die Halter- oder Kluppenhebel sind dabei so ausgestaltet, daß sie mindestens mit einem an ihnen vorgesehenen Ansatz bei ihrem Umlauf als Magnetanker in den Bereich des Magnetfeldes der Magnetschienen gelangen, so daß unter deren Einwirkung die Verschwenkbewegung zwangsweise durchgeführt wird.

Gemäß dieser Vorveröffentlichung ist vorgesehen, daß die Magnetschiene zum Verschwenken der Kluppenhebel geradlinig und parallel zur Umlaufbahn der Kluppen verläuft. Zusätzlich ist noch eine weitere, mittels magnetischer Kopplung betätigbare Verschwenkeinrichtung vorgesehen, nämlich zur Verschwenkung des mit den jeweiligen Kluppenhebeln zusammenwirkenden Kluppentisches. Die hierfür vorgesehene weitere Magnetschiene ist dabei schraubenförmig mit zur Umlaufbahn paralleler Schraubenachse ausgerichtet, so daß in dem betreffenden Bereich in Abhängigkeit der Vorwärtsbewegung der Kluppenwagen (d.h. in diesem Falle der Kettenumlaufbahn) der über einen Verschwenkhebel gehaltene Kluppentisch zwischen zwei Endlagen verschwenkt wird.

Eine Magnetkoppel-Einrichtung ist auch aus der britischen GB 99 12 45 A1 bekannt geworden. Allerdings ist gemäß dieser Vorveröffentlichung vorgesehen, daß der die Folienbahn ergreifende und gegenüber dem Kluppentisch haltende Kluppenhebel in Öffnungsstellung mittels einer einen Anschlag darstellenden Kurvenbahn verschwenkt wird. Lediglich in seiner End-Öffnungsstellung wird der Kluppenhebel über einen Magneten gehalten. Zum Schließen wird ein den Magneten haltender Hebel durch Auflaufen auf einem Rad in eine Öffnungsstellung verschwenkt, wodurch zwangsweise die Magnetkopplung aufgehoben und der Kluppenhebel aufgrund seines Eigengewichtes auf den Kluppentisch herabfällt. Besonders nachteilig ist hier der eigentlich mechanisch ablaufende Öffnungs- und Schließvorgang, wodurch die eingangs geschilderten starken mechanischen Beanspruchungen zu den dort aufgeführten Nachteilen führen.

Eine Horizontalreckmaschine zum Verklemmen oder Verspannen der Ränder einer Kunststoffolienbahn mittels einer magnetisch betätigbaren Kluppenhebel-Einrichtung ist auch aus der EP 0 410 494 B1 bekannt geworden. Zum Öffnen und Schließen der Klemmhebel (Kluppenhebel) sind hier gegenüberliegend zur Einspannstelle am Kluppenhebel Dauermagneten vorgesehen. Im Einlaß- und im Auslaßbereich der Streckmaschien sind zum Schließen bzw. Öffnen der Kluppenhebel entsprechend der Öffnungs- bzw. Schließkurve der Kluppenhebel ortsfeste Magneten längs einer entsprechenden Schiene angeordnet, wobei die ortsfesten Magneten an dem entsprechenden Streckenabschnitt wie aber auch die auf den Kluppenhebeln vorgesehenen Magnete auf Abstoßung gepolt sind. Durch diese Abstoßungskraft wird die Messer- oder Kluppenklappe von ihrer offenen in ihre geschlossene Stellung bzw. umgekehrt von ihrer geschlossenen in ihre Freigabestellung verschwenkt.

Insbesondere diese zuletzt genannte Anordnung weist den Nachteil auf, daß jeder einzelne Kluppenhebel mit einem separaten Magneten ausgestattet sein muß, was nicht nur einen hohen Fertigungsaufwand bezüglich der einzelnen Messer- oder Kluppenklappen bedeutet, sondern vor allem auch zu einer deutlichen Verteuerung der gesamten Anlage beiträgt.

Aufgabe der vorliegenden Erfindung ist es von daher, ausgehend von dem gattungsbildenden Stand der Technik eine verbesserte, magnetisch betätigbare Kluppenhebel-Betätigungsvorrichtung, d.h. also einen Kluppenöffner/-schließer zu schaffen.

Die Aufgabe wird erfindungsgemäß entsprechend den im Anspruch 1 oder 13 angegebenen Merkmalen gelöst. Vorteilhafte Ausgestaltungen der Erfindung sind in den Unteransprüchen angegeben.

Mittels der erfindungsgemäßen magnetischen Kluppenhebel-Betätigungsvorrichtung läßt sich eine sichere und effiziente Schließ- und Öffnungsbewegung der Kluppenhebel oder -messer durchführen. Da die Öffnungs- und Schließbewegung nur über die Magnetkopplung erfolgt, wird beispielsweise gegenüber mechanischen Schließ- und Öffnungseinrichtungen die mechanische Beanspruchung drastisch reduziert. Vor allem auch die Lärmbelastung nimmt deutlich ab.

Durch die erfindungsgemäß vorgesehene Sicherheitseinrichtung in Form einer mechanischen Schiene läßt sich der wichtige Vorteil erzielen, daS selbst in Extremsituationen (in denen beispielsweise aufgrund extrem hoher Klemmkräfte ein Kluppenhebel nicht öffnet) eine Beschädigung der gesamten Anlage und/oder eine Beeinträchtigung der damit herzustellenden Folie sicher vermieden wird. Denn für den Fall, daß die magnetischen Koppelkräfte nicht ausreichend sein sollten, ist durch die erfindungsgemäße Sicherheitseinrichtung gleichwohl ein weiterer kontinuierlicher Betrieb der Anlage ohne jede Unterbrechnung möglich. Zumindest durch die redundante mechanische Schiene kann der Kluppenhebel entsprechend umgelegt werden (dies hat in der Regel vor allem Bedeutung beim Öffnen des Kluppenhebels, also beim Umschwenken von seiner Schließ- in seine Öffnungsstellung, wobei aber bei einer weiteren gegenüberliegenden Schiene eine entsprechende mechanische Zwangs-Umsteuerung auch von Öffnungs- in Schließstellung grundsätzlich möglich ist).

Dabei kann in einer vorteilhaften Ausgestaltung der Erfindung die der Sicherheit dienende mechanische Schiene zumindest in Teilbereichen ein elastisches Verhalten aufweisen, also selbst elastisch gebildet und/oder elastisch abgestützt sein.

Insbesondere gegenüber dem gattungsbildenden Stand der Technik gemäß der DE-AS 1 114 460 muß als überraschend bezeichnet werden, daß durch eine spezifische Polschuh-Formgebung und/oder durch eine spezifische Ausgestaltung des am Kluppenhebel ausgebildeten magnetischen Rückschlusses oder Ankers die Magnetkoppelkräfte gegenüber bisherigen Lösungen deutlich erhöht werden können. Das bietet den weiteren Vorteil, daß hohe Magnetkoppelkräfte auch bei Verwendung gegenüber dem Stand der Technik vergleichsweise 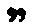 schwachen" Magneten erzeugt werden können.

Erfindungsgemäß wird nämlich die Verbesserung u. a. dadurch erreicht, daß die Polschuhe im Querschnitt in Richtung zum Kluppenhebel hin, d.h. in Richtung auf den den magnetischen Rückschluß bildenden Koppelansatz des Kluppenhebels hin im Querschnitt mit zunehmender Materialdicke ausgebildet sind. Es hat sich nämlich gezeigt, daß sich dadurch der Streufluß zu Gunsten des Nutzflusses deutlich verkleinern läßt, wodurch die Kraftwirkung steigt.

In einer alternativen oder ergänzenden Ausführungsform ist vorgesehen, daß die vorzugsweise aus Permanentmagneten bestehenden Magneten so zwischen den beiden Polschuhen angeordnet sind, daß die Magneten gegenüberliegend zum Kluppenhebel über die Polschuhe überstehen, und zwar bevorzugt über mehr als 5 %, insbesondere 10 % oder etwa 15 % der Höhe der die Magneten dazwischen sandwichartig aufnehmenden Polschuh-Schienen.

Alternativ und/oder ergänzend dazu wird eine weitere gesteigerte Kraftwirkung und damit magnetische Kopplung dadurch erzielt, daß der am Kluppenhebel ausgebildete und den magnetischen Rückschluß bzw. den Anker bildende Kopplungsbereich im Querschnitt eine U-förmige oder einer U-Form zumindest angenäherte Gestaltung aufweist. Die beiden U-förmigen Schenkel liegen dabei in Ausrichtung zu den beiden mit Querversatz angeordneten Polschuh-Schienen. Gegenüber einem Rückschluß mit einer ebenen oder quasi ebenen Oberfläche in der Luftspaltzone wird dadurch eine deutliche Erhöhung der Kraft und eine sehr viel steilere Kraft-Kennlinie gegenüber der Auslenkung erreicht.

Die Ausführungsform der Polschuh-Schienenabschnitte gemäß Anspruch 3, 6 sowie 11 beinhalten dabei bereits für sich genommen eigenständige erfinderische Lösungen, wodurch eine gegenüber dem Stand der Technik deutlich verbesserte Magnetkopplung erzielbar ist. Insbesondere bei kumulativer Verwirklichung aller vorstehend erwähnter Verbesserungen gemäß Anspruch 3,6 sowie 11 wird dabei eine bisher nicht bekannte überraschend starke Magnetkopplung gewährleistet.

In einer besonders bevorzugten Ausführungsform der Erfindung werden dabei alle vorstehend erläuterten, die Kraftwirkung bereits einzeln deutlich verbessernden Maßnahmen kumulativ angewendet.

In einer Weiterbilung der Erfindung entspricht dabei die Schenkelhöhe der im Querschnitt U-förmigen Kopplungsabschnitte am Kluppenhebel etwa dem 2- bis 10-fachen, insbesondere dem 3- bis 8-fachen vor allem dem 4- bis 6-fachen der Höhe der Luftspaltzone zwischen U-förmigem Kopplungsbereich und Polschuhen. Der die beiden Schenkeln des U-förmigen Kopplungsbereiches verbindende Basisabschnitt weist bevorzugt eine Dicke auf, die etwa dem 0,5-bis dem 2-fachen, vorzugsweise dem 0,75- bis 1,5-fachen, insbesondere dem 1,0- bis 1,2-fachen der Schenkelhöhe entspricht.

Eine weitere Verbesserung läßt sich dadurch erzielen, wenn die Breite der U-förmigen Schenkel des Kopplungsbereiches zumindest geringfügig schmäler sind als die maximale Breite der Polschuhe benachbart zum Kopplungsbereich des Kluppenhebels. Dabei kann die Breite der Schenkel bezogen auf die Breite der Polschuhe bevorzugt etwa das 0,6- bis 0,9-fachen, insbesondere das 0,8- bis 0,9-fache der Breite der Polschuhe betragen.

Dabei wird ferner betont, daß trotz Verwendung einer berührungslosen Magnetkopplung eine hohe Sicherheit allein dadurch gewährleistet werden kann, daß parallel zu der Polschuh-Schiene eine Notlaufschiene vorgesehen ist. Sollte aus irgendwelchen Gründen beim Öffnen oder Schließen der Kluppenhebel allein durch die Magnetwirkung nicht umgelegt werden, so würde der Kluppenhebel vorzugsweise mit seinem Ende an der Notlaufschiene anschlagen und in Abhängigkeit davon in die jeweils gewünschte umgelegte Stellung umgelegt werden. Bedeutung könnte dies in der Praxis vor allem nur dann haben, wenn die Schließkräfte zur Fixierung der bewegten Materialbahn für die Magnetkoppelkräfte zu groß werden. Nach kurzzeitigem Anschlag an der Notlaufschiene und Überwindung der Klemmkräfte würde dann in der Regel aber die Magnetkopplung wieder wirken, um den Kluppenhebel dem Verlauf der Magnetschiene folgend gezielt und gesteuert umzuschwenken.

Schließlich ist in einer alternativen oder bevorzugten Ausführungsform der Erfindung ferner vorgesehen, daß die Polschuh-Schiene im Falle einer Störung ausweichen kann, insbesondere verschwenken kann.

Die Erfindung wird nachfolgend anhand von Ausführungsbeispielspielen näher erläutert. Dabei zeigen im einzelnen:
- Figur 1a :: eine schematische auszugsweise Unteransicht auf eine an einer Seite einer bewegten Materialbahn verlaufende Transporteinrichtung mit einer Magnetpol-Schieneneinrichtung zum Verschwenken eines Kluppenhebels;
- Figur 1b :: eine schematische perspektivische Darstellung zur Erläuterung der Schwenkbewegung des rückwärtigen Endes eines Kluppenhebels während der Vorwärtsbewegung eines Kluppenwagens;
- Figur 2 :: eine schematische Querschnittsdarstellung längs der Linie A-A in Figur 1;
- Figur 3 :: eine Querschnittsdarstellung längs der Linie B-B in Figur 1;
- Figur 4 :: eine schematische vergrößerte Querschnittsdarstellung durch einen ansatzweise gezeigten Kluppenkörper mit darauf verschwenkbaren Kluppenhebel und Magnetpol-Schiene;
- Figur 5 :: eine vergrößerte schematische Detaildarstellung der Magnetpol-Schiene im Querschnitt sowie des magnetischen Rückschlusses am Kluppenhebel;
- Figur 6 :: ein Diagramm zur Verdeutlichung der Kennkraftlinie bezogen auf die Auslenkung (Verschwenung) des Kluppenhebels;
- Figur 7 :: eine im wesentlichen der Darstellung gemäß Figur 4 entsprechende auszugsweise Wiedergabe einer Polschuhschiene mit einer Ausweicheinrichtung; und
- Figur 8 :: eine Seitenansicht quer zur Polschuhschiene mit einer zu Figur 7 abweichenden Ausweicheinrichtung.

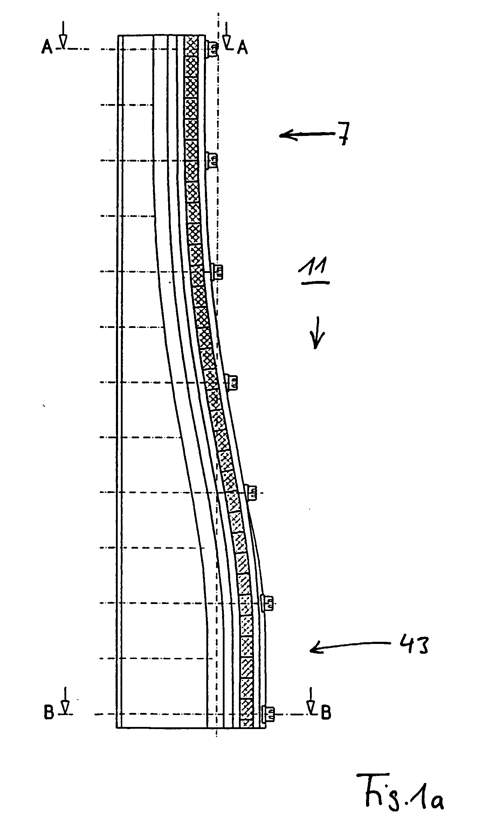

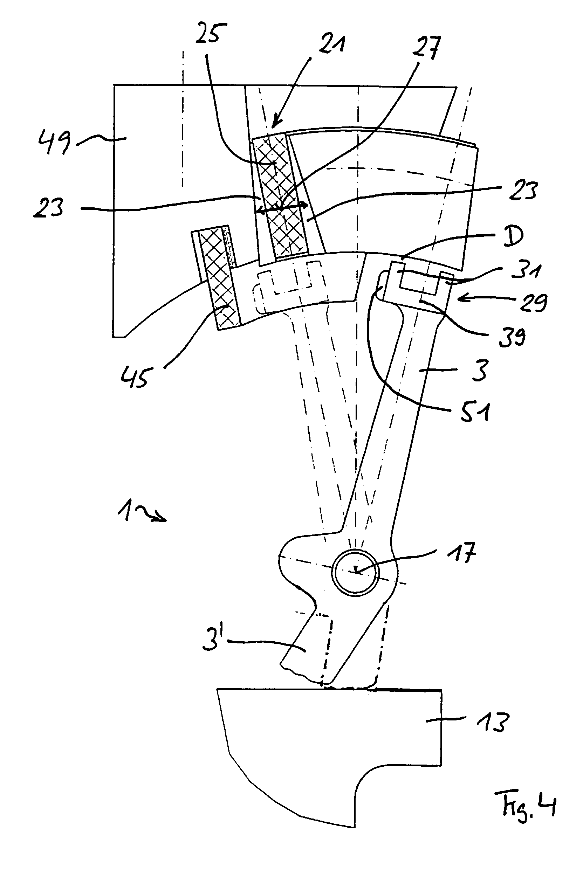

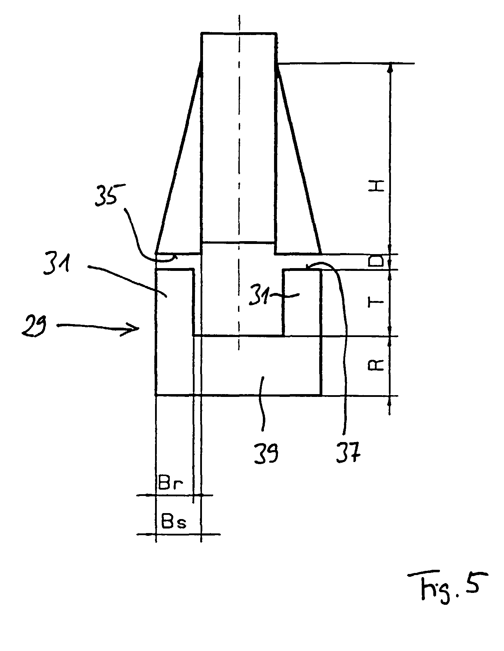

In Figur 1a ist in schematischer Draufsicht ein Ausschnitt aus einer an einer Seite einer bewegten Transportbahn (beispielsweise einer Kunststoff-Folienbahn in einer Folien-Reckanlage) verlaufenden Führungseinrichtung, längs der Kluppenkörper 1 verfahrbar sind. Es kann sich dabei im Falle einer Querreckanlage um eine Kluppenkette handeln, im Falle einer Simultan-Reckanlage beispielsweise auch um Kluppenwagen, deren Abstand zueinander in der Reckzone gegenüber dem Einlaufbereich (Stack-Bereich) größer wird. Ein Kluppenwagen 1 ist im Querschnitt nur auszugsweise schematisch in Figur 4 und 5 teilweise angedeutet, und dort nur im wesentlichen anhand des Kluppenhebels und eines Kluppentisches gezeigt.

In der Draufsicht gemäß Figur 1a ist beispielsweise ein Ausschnitt der Führungseinrichtung für die längs dieser Führungseinrichtung verfahrbaren Kluppenkörper 1 gezeigt, wobei die Führungseinrichtung eine Betätigungsvorrichtung zum magnetischen Öffnen und Schließen der auch als Kluppenmesser bezeichneten Kluppenhebel 3 umfaßt.

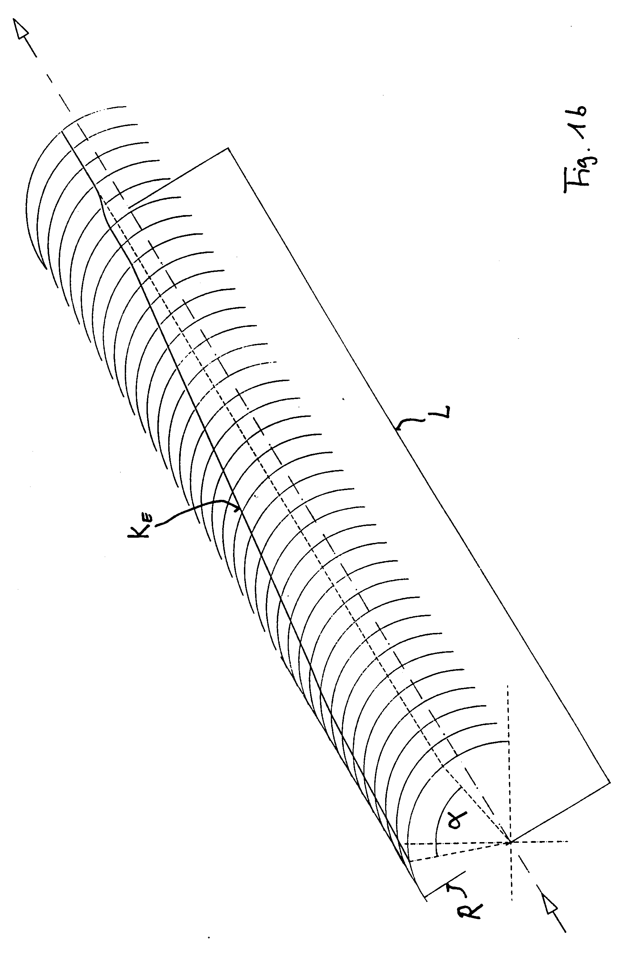

Im sog. Einfangbereich 7 nehmen dann die Kluppenhebel 3 noch ihre Verschlußstellung ein, in welchem ein Rand einer bewegten Materialbahn 11 (beispielsweise einer zu reckenden Folienbahn) zwischen dem Klemmbereich 3' des Kluppenhebels 3 und dem sog. Kluppentisch 13 eingespannt gehalten wird. Der Kluppenhebel 3 nimmt dabei in der schematischen Querschnittsdarstellung gemäß Figur 4 die dort strichliert wiedergegebene Stellung ein. Diese Stellung ist in Figur 2 schematisch angedeutet, wobei in Figur 2 die Längsachse des um eine parallel zur Führungsbahn oder Transportrichtung verlaufenden Achse 17 verschwenkbar ist.

Anhand von Figur 1b ist dabei in perspektivischer Darstellung die Bewegungsbahn K_{E} eingezeichnet, die das Ende des Kluppenhebels 3 während seiner Verschwenkbewegung in Schließrichtung durchläuft, wenn er gemäß der Pfeildarstellung längs einer strichpunktiert angedeuteten gerade verlaufenden Führungsschiene während der Weiterfahrt des Kluppenwagens verschwenkt wird. Das Ende des Kluppenhebels beschreibt danach also eine leicht wendel- oder schraubenförmige Schwenkbewegung um einen Winkel α um seine Schwenkachse 17. Mit L ist in Figur 1b die Weglänge bezeichnet, während der die Verschwenkbewegung des Kluppenhebels durchgeführt wird. R bezeichnet dabei die Länge des Kluppenhebels bezogen auf seine Schwenkachse 17.

Wie aus der vergrößerten schematischen Querschnittsdarstellung gemäß Figur 4 ersichtlich ist, ist in axialer Verlängerung des Kluppenhebels 3 eine Polschuh-Schiene 21 in Längsrichtung der Führungsbahn/Transportvorrichtung, aber oberhalb dieser sinus- oder leicht schraubenförmig verlaufend angeordnet.

Die Polschuh-Schiene 21 besteht dabei aus zwei im Seitenversatz zueinander verlaufende Polschuh-Schienenabschnitte 23, zwischen denen Magnete 25 mit quer dazu ausgerichteter Pol- und Magnetflußrichtung 27 sandwichartig angeordnet sind. Bevorzugt werden Permanentmagnete verwendet, wobei aber auch elektromagnetisch erregbare Magnete möglich sind. Dabei kann längs der Vorschub-Schiene 21 eine Vielzahl von separaten, hintereinander sitzenden Magneten 25 vorgesehen sein.

Aus der vergrößerten schematischen Querschnittsdarstellung gemäß Figur 4 ist ersichtlich, daß die Polschuh-Schienenabschnitte 23 im Querschnitt sich in Richtung zum Kluppenhebel 3 hin konisch erweitern. Im gesamten Ausführungsbeispiel ist dieser Querschnitt trapez- oder dreieckförmig gebildet.

Ferner sind die zwischen den beiden Polschuh-Schienenabschnitten 23 vorgesehenen Magneten 25 so angeordnet, daß sie in Richtung des sich im Querschnitt verjüngenden Bereiches der Polschuh-Schienenabschnitte (also vom Kluppenhebel weg) versetzt liegen und dabei bevorzugt die Höhe H der Polschuhschienenabschnitte um ein Maß von mindestens 5 %, vorzugsweise mehr als 10 %, insbesondere um 15 % überragen.

Unter Ausbildung eines geringen Luftspaltes D verläuft unterhalb der sog. Polschuh-Schiene 21 der Koppelabschnitt 29 des Kluppenhebels 3, der den magnetischen Rückschluß oder Anker bildet.

Im gezeigten Ausführungsbeispiel ist die Querschnittsform dieses Koppelabschnittes 29 im wesentlichen U-förmig gebildet.

Aus der vergrößerten Detaildarstellung gemäß Figur 5 ist dabei zu ersehen, daß die Höhe T der Schenkel 31 des im Querschnitt U-förmigen Koppelabschnittes etwa dem 2- bis 10-fachen, vorzugsweise dem 3- bis 8-fachen, insbesondere dem 4- bis 6-fachen des Luftabstandes D zwischen den Wirkflächen 35 der Polschuh-Schiene 21 und der Wirkfläche 37 der Stirnseiten der Schenkel 31 des U-förmigen Koppelabschnittes 29 bilden sollen.

Die Dicke R der Basis 39 des im Querschnitt quer zur Transportrichtung 15 U-förmigen Koppelabschnittes 29 ist so gewählt, daS diese Dicke R etwa dem 0,5- bis 2-fachen, insbesondere dem 1,0- bis 1,2-fachen der Schenkelhöhe T entspricht.

Eine weitere Verbesserung läßt sich dadurch erzielen, daß die Schenkeldicke Bs der Schenkel 31 des U-förmigen Koppelabschnittes 29 geringfügig schmäler ist als die maximale Dicke der im Querschnitt sich in Richtung Kluppenhebel verdickenden Polschuh-Schienenabschnitte 23. Als günstig hat sich herausgestellt, wenn diese Schenkeldicke Bs kleiner als das 0,9-fache der größen Polschuh-Schienendicke Br entspricht. Günstiger ist, wenn die Schenkeldicke Bs dabei größer als das 0,5-fache, insbesondere größer als das 0,6, 0,7- bzw. 0,8-fache der maximalen Polschuh-Schienendicke Br entspricht.

Nachfolgend wird die Wirkungsweise des magnetisch betätigbaren Kluppenöffners/-schließers erläutert.

Nachdem der in Figur 4 in strichlierter Lage befindliche und den Rand einer Materialbahn gegenüber dem Kluppentisch verspannt haltende Kluppenhebel 1 in den Einfangbereich 7 gelangt ist, verläuft die Polschuh-Schiene 1 in Draufsicht leicht sinusförmig, d.h. in einer teil-schraubenförmigen Bahn.

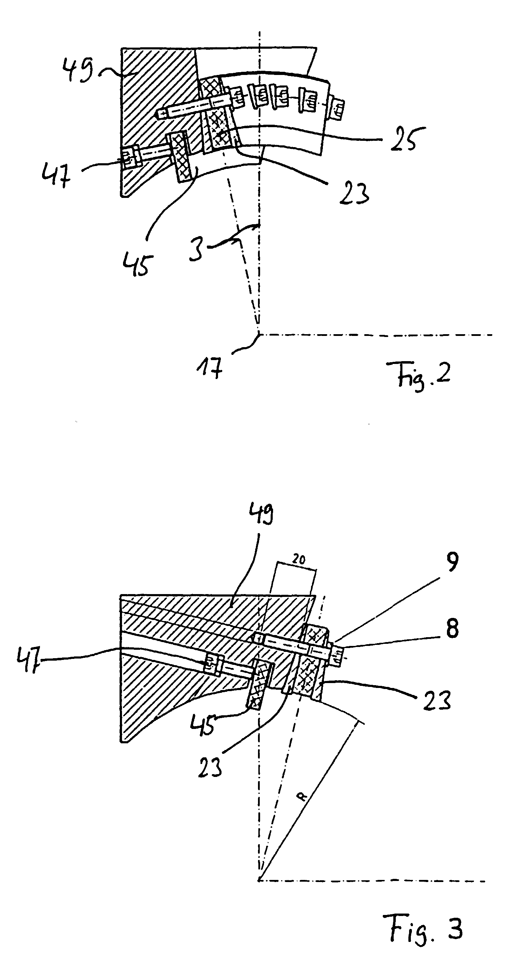

Die von dem Magnet 25 ausgehenden magnetischen Kraftlinien verlaufen über die Polschuh-Schienenabschnitte 23 und den im Querschnitt U-förmigen Koppelabschnitt 29. Durch die dadurch bewirkten magnetischen Koppelkräfte wird der Kluppenhebel 3 entsprechend dem Verlauf der Polschuh-Schienen 21 um seine Achse 17 von seiner Verschluß- bis in seine in Figur 3 und 4 dargestellte maximale Öffnungsstellung verschwenkt. Durch den tangentialen Einfangbereich und den tangentialen Ausfangbereich 43 ergibt sich dabei eine kontinuierliche und überschwingungsfreie Verschwenkbewegung.

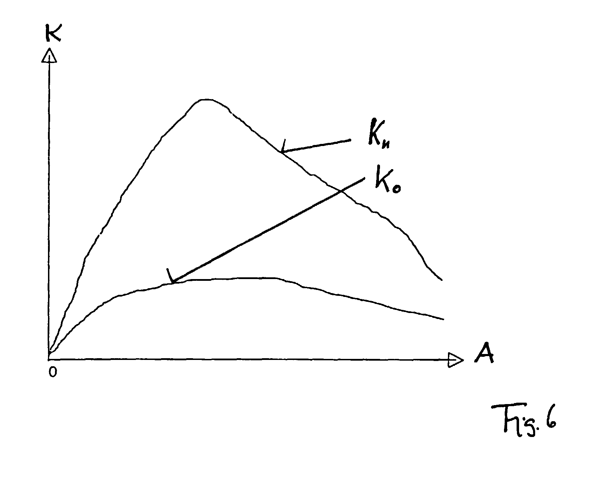

Anhand des Diagramms von Figur 6 ist relativ der Kraftverlauf K bezogen auf die Auslenkung A des Kluppenhebels dargestellt. Die Kurve Kₙ zeigt den Kraftverlauf, wenn der ankerförmige Rückschluß (Koppelabschnitt 29) am Kluppenhebel U-förmig und die Polschuh-Schienenabschnitte 23 zum Kluppenhebel hin mit zunehmender Materialdicke gestaltet sind. Im Vergleich dazu ist in Figur 6 auch das Kraftlinien-Kennfeld Kₒ eingezeichnet, das einem Kraftverlauf entspricht, wenn ein ebener, d.h. im Querschnitt nicht U-förmiger Rückschluß oder Koppelabschnitt 29 und Schienenabschnitte 23 verwendet werden, die einen gleichförmigen Materialquerschnitt aufweisen.

Beim Ergreifen und Einspannen einer Folienbahn erfolgt die Schließbewegung durch eine umgekehrte Umsteuerung unter Verwendung einer entsprechenden Polschuhe-Schiene.

In den Zeichnungen ist ferner auch noch eine Sicherheits- oder Notlaufschiene gezeigt, die aus einer mechanischen Anschlagschiene 45 besteht. Diese ist mittels Schrauben 47 einstellbar an einem Polschuh-Schienenträger 49 längs des Verschwenkbereiches so verankert, daß sie im gezeigten Ausführungsbeispiel über die untere Begrenzung der Wirkfläche 35 der Polschuhschiene 21 übersteht und dabei seitlich dem Verlauf der Polschuh-Schiene 21 folgend angeordnet ist. In gleicher Höhe ist ein Gleitkörper 51 an der Seite des Koppelabschnittes 29 des Kluppenhebels 3 vorgesehen. Sollte aus unerwarteten Gründen im Einzelfall die erläuterte Magnetkopplung nicht ausreichend sein, so würde der Kluppenhebel 3, d.h. der Gleitkörper 51, an der Anschlagschiene 45 seitlich anschlagen und durch den in Draufsicht sinus- oder schraubenförmigen Verlauf der Anschlagschiene 45 nunmehr durch mechanische Kraftwirkung in Öffnungsstellung verschwenkt werden. Nach mechanischer Auslösung durch Anschlag des Gleitkörpers 51 an der Anschlagschiene 45 würde dann aber wieder der Kluppenhebel nicht schlagartig in Öffnungsstellung überschwingen, sondern durch die Magnetkopplung des Polschuhs 21 wieder eingefangen und zielgerichtet weiter in seine endgültige Öffnungsstellung ohne irgendwelche Überschwinger verschwenkt werden.

Dabei kann die mechanische Schiene 45 in Teilbereichen ein elastisches Verhalten aufweisen, d.h. beispielsweise elastisch aufgebaut und/oder zusammengesetzt oder zumindest elastisch abgestützt sein.

Die Polschuh-Schienenabschnitte 23 wie aber auch zumindest der Kopplungsbereich 29 am Kluppenhebel 3 bestehen aus magnetisch gut leitendem Material, insbesondere aus ferromagnetischem Material.

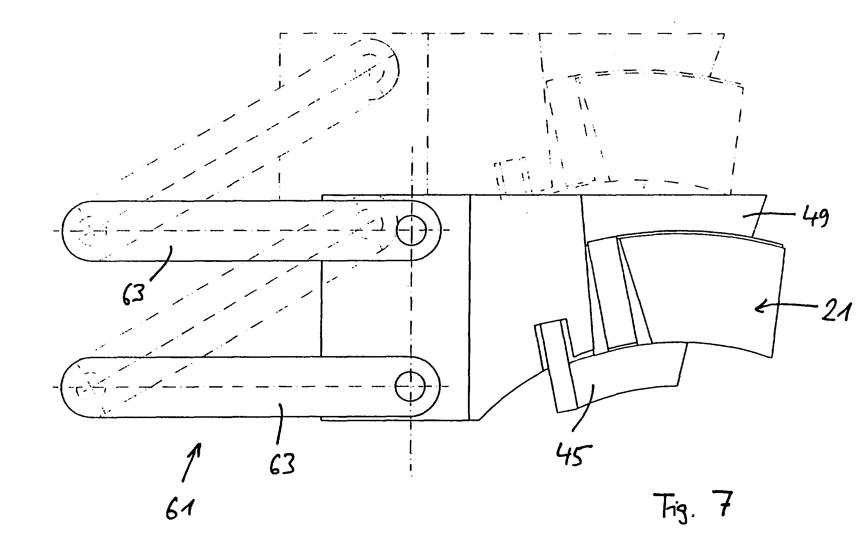

Anhand von Figur 7 ist die in Figur 4 dargestellte Polschuhschiene nochmals wiedergegeben. Abweichend zu dem Ausführungsbeispiel nach Figur 4 ist nunmehr jedoch der Polschuh-Schienenträger 49 über eine Ausweicheinrichtung 61 verankert und geführt. Im Falle eines Störzustandes, wenn beispielsweise Folienreste in den Luftspalt zwischen dem Kluppenhebelende 29 und der Polschuh-Schiene 21 gelangen sollten, kann über die erwähnte Ausweicheinrichtung 61 die gesamte Polschuh-Schiene beispielsweise entgegen der Gravitationskraft (und/oder den Magnetkoppelkräften zwischen den Kluppenhebeln und der Polschuh-Schiene) ausweichen, im gezeigten Ausführungsbeispiel nach oben hin ausweichen. Die Ausweicheinrichtung 61 besteht dabei aus einer Parallelführung unter Verwendung von mehreren, parallel zueinander angeordneten, verschwenkbaren Hebeln 63. Eine über die Ausweicheinrichtung eingenommene Position ist in Figur 7 strichliert dargestellt.

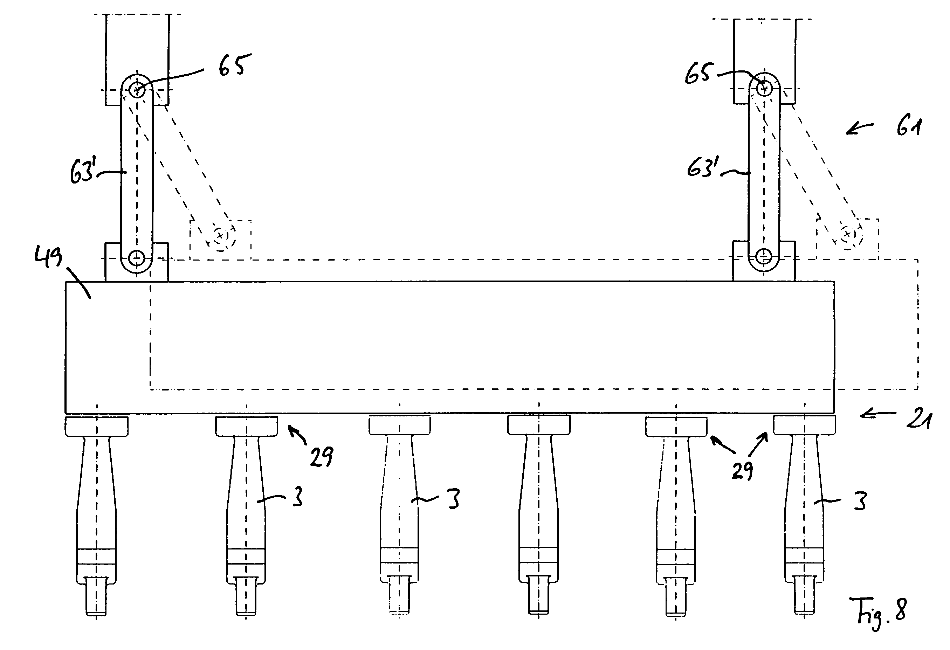

In einer dazu alternativen Ausführungsform gemäß Figur 8 ist vorgesehen, daß hier die Ausweicheinrichtung 61 im wesentlichen in Vertikalrichtung herabhängende Hebel 63' umfaßt, an welchem unten die Polschuh-Schiene 21, beispielsweise an dem Polschuh-Schienenträger 49 aufgehängt ist. Bei Figur 8 sind in der Seitenansicht (also in der Ebene der Materialbahn) mehrfach Kluppenhebel 3 eingezeichnet, die zu unterschiedlichen Kluppenwagen gehören, die üblicherweise längs der Polschuh-Schiene 21 versetzt zueinander längs verfahren werden. Im Falle einer Störung (wenn also beispielsweise wiederum Folienreste in den Magnetabstand zwischen Polschuh-Schiene und dem magnetischen Koppelende der Kluppenhebel 3 gelangen) könnte dann - wie dies ebenfalls strichliert eingezeichnet ist - die Polschuh-Schiene 21 aus ihrer tiefsten Lage heraus mittels der Hebel 63' um ihre oberen Aufhängungen mit seitlicher, aber vor allem auch mit von den Enden der Kluppenhebel weg gerichteter Quer-Komponente verschwenkt werden. Nach Behebung der Störung kann eine Rückverschwenkung in Funktionsstellung allein durch die Schwerkraft erfolgen, wie u. a. auch bei dem Ausführungsbeispiel gemäß Figur 7.

Die Ausführungsbeispiele sind für jenen Fall beschrieben und gezeigt worden, das als Magnete 25 Permanentmagnete verwendet werden. Genauso können aber anstelle von Permanentmagneten auch Elektromagnete oder aber Permanent- und Elektromagnete gemischt verwendet werden. Bei Verwendung von nur aus Elektromagneten oder aus Elektro- und Permanentmagneten bestehenden Magneten können diese elektrisch ansteuerbaren Magnete entweder permanent mit Strom oder auch mit einer Impulserregung betrieben werden.

## Patentansprüche

1. Magnetische Kluppenhebel-Betätigungsvorrichtung nach Art eines Kluppenöffners/-schließers für eine Transportvorrichtung für eine bewegte Materialbahn, insbesondere eine Reckanlage für Kunststoff-Folienbahnen, mit einem um eine Achse (17) an einem Kluppenkörper (1) verschwenkbar gelagerten und mit einem Koppelabschnitt (29) versehenen Kluppenhebel (3), und mit einer zumindest über eine Teil-Wegstrecke der gesamten Umlaufbahn der Kluppenkörper (1) verlaufenden Koppel-Schiene (21), wobei zwischen der Koppel-Schiene (21) und dem am Kluppenhebel (3) ausgebildeten Koppelabschnitt (29), der von der Koppel-Schiene (21) durch einen Luftspalt oder einen Abstand (D) getrennt ist, eine Magnetkopplung zur Verschwenkung des Kluppenhebels (3) in Abhängigkeit des Verlaufs der Koppel-Schiene (21) besteht, **gekennzeichnet durch** die folgenden Merkmale
- die magnetische Betätigungsvorrichtung für den Kluppenhebel (3) umfaßt ferner eine Sicherheitseinrichtung für die Betätigung des Kluppenhebels (3),
- die Sicherheitseinrichtung besteht aus einem mechanisch wirkenden Redundantsystem zum zwangsweisen Öffnen und/oder Schließen des Kluppenhebels (3) bei Ausfall und/oder Unwirksamkeit der magnetisch Betätigungseinrichtung,
- die Sicherheitseinrichtung ist so angeordnet und ausgebildet, daß im Falle einer durchzuführenden Öffnungs- und/oder Schließbewegung der Kluppenhebel (3) mittels der Sicherheitseinrichtung zumindest in seinem ersten Öffnungsschwenkbereich aus seiner Schließstellung heraus bzw. zumindest in seinem Endschwenkbereich in seine Schließstellung hinein mechanisch verschwenkbar ist.

2. Magnetische Kluppenhebel-Betätigungsvorrichtung nach Anspruch 1, **dadurch gekennzeichnet**, daß die Sicherheitseinrichtung aus einer zur Koppel-Schiene (21) parallel verlaufenden mechanischen Schiene (45) besteht, die zur Koppel-Schiene (21) versetzt so angeordnet ist, daß der Kluppenhebel (3) bei Ausfall oder nicht ausreichender Magnetkopplung an dieser mechanischen Schiene (45) anschlägt und in seine jeweils andere Verschwenkstellung verschwenkbar ist.

3. Magnetische Kluppenhebel-Betätigungsvorrichtung nach Anspruch 1 oder 2, wobei die Koppel-Schiene (21) als Polschuh-Schiene (21) ausgebildet ist, die zwei in Seitenversatz zueinander liegende Polschuh-Schienenabschnitte (23) unter sandwichartiger Aufnahme von dazwischen angeordneten Magneten (25) umfaßt, und wobei am Kluppenhebel (3) ein Koppelabschnitt (29) als magnetischer Rückschluß ausgebildet ist, dadurch gekennzeichnet, daß die Dicke der Polschuh-Schienenabschnitte (23) in Richtung auf den Kluppenhebel (3) zunimmt.

4. Kluppenhebel-Betätigungsvorrichtung nach Anspruch 3, dadurch gekennzeichnet, daß die Polschuh-Schienenabschnitte (23) in Richtung auf den Kluppenhebel (3) zu im Querschnitt konisch zunehmend ausgebildet sind.

5. Kluppenhebel-Betätigungsvorrichtung nach Anspruch 3 oder 4, **dadurch gekennzeichnet**, daß die Polschuh-Schienenabschnitte (23) im Querschnitt trapez- bis dreieckförmig gestaltet sind.

6. Kluppenhebel-Betätigungsvorrichtung nach einem der Ansprüche 3 bis 5, **dadurch gekennzeichnet**, daß der benachbart zur Polschuh-Schiene (21) ausgebildete und den magnetischen Rückschluß bildende Koppelabschnitt (29) im Querschnitt quer zu seiner Verschwenkachse (17) U-förmig gestaltet ist.

7. Kluppenhebel-Betätigungsvorrichtung nach Anspruch 6, **dadurch gekennzeichnet**, daß die Schenkelhöhe (T) der Schenkel (31) des im Querschnitt U-förmigen Koppelabschnittes (29) etwa dem 2- bis 10-fachen, insbesondere dem 3- bis 8-fachen, vorzugsweise dem 4- bis 6-fachen der Dicke des zwischen den Wirkflächen (35) der Polschuh-Schiene (21) und den Wirkflächen (37) des Koppelabschnittes (29) ausgebildeten Luftspaltes (D) ist.

8. Kluppenhebel-Betätigungsvorrichtung nach Anspruch 6 oder 7, **dadurch gekennzeichnet**, daß die die beiden Schenkel (31) verbindende Basis (39) des Koppelabschnittes (29) eine Dicke aufweist, die etwa dem 0,5- bis 2-fachen der Schenkelhöhe (T), insbesondere dem 0,75- bis 1,5-fachen, vorzugsweise dem 1- bis 1,2-fachen der Schenkelhöhe (T) entspricht.

9. Kluppenhebel-Betätigungsvorrichtung nach einem der Ansprüche 6 bis 8, **dadurch gekennzeichnet**, daß die Schenkeldicke (Bs) der Schenkel (31) zumindest geringfügig kleiner ist als die maximale Dicke der Polschuh-Schienenabschnitte (23).

10. Kluppenhebel-Betätigungsvorrichtung nach Anspruch 9, **dadurch gekennzeichnet**, daß die Schenkeldicke (Bs) der Schenkel (31) etwa dem 0,5- bis 0,9-fachen, insbesondere dem 0,8- bis 0,9-fachen der maximalen Dicke der Polschuh-Schienenabschnitte (23) entspricht.

11. Kluppenhebel-Betätigungsvorrichtung nach einem der Ansprüche 3 bis 10, **dadurch gekennzeichnet**, daß die Magnete (25) zwischen den beiden Polschuh-Schienenabschnitten (23) so angeordnet sind, daß die Magnete (25) bzw. deren magnetischer Kernbereich auf der zum Kluppenhebel (3) abgewandt liegenden Seite die Oberkante der Polschuh-Schienenabschnitte (23) überragt.

12. Kluppenhebel-Betätigungsvorrichtung nach Anspruch 11, **dadurch gekennzeichnet**, daß die Magnete (25) die Höhe (H) der Polschuh-Schiene (21) um zumindest 5 %, vorzugsweise um zumindest 10 %, insbesondere um 10 bis 20 %, vorzugsweise etwa 15 % überragt.

13. Kluppenhebel-Betätigungsvorrichtung nach dem Oberbegriff des Anspruches 1 oder einem der Ansprüche 1 bis 12, **dadurch gekennzeichnet**, daß ferner eine Ausweicheinrichtung (61) vorgesehen ist, worüber die Polschuh-Schiene (21) von dem Koppelbereich der Kluppenhebel (3) wegbewegbar ist.

14. Kluppenhebel-Betätigungsvorrichtung nach Anspruch 13, **dadurch gekennzeichnet**, daß die Ausweicheinrichtung (61) mittels Hebel (63, 63') verschwenkbar ist.

15. Kluppenhebel-Betätigungsvorrichtung nach Anspruch 13 oder 14, **dadurch gekennzeichnet**, daß die Polschuh-Schiene (21) mittels der Ausweicheinrichtung (61) entgegen der Schwerkraft von den Kluppenhebeln (3) wegbewegbar ist.

16. Kluppenhebel-Betätigungsvorrichtung nach einem der Ansprüche 13 bis 15, **dadurch gekennzeichnet**, daß die Ausweicheinrichtung (61) aus einer Parallelführung (63, 63') besteht.

17. Kluppenhebel-Betätigungsvorrichtung nach einem der Ansprüche 1 bis 16, **dadurch gekennzeichnet**, daß die mechanische Schiene (45) in Teilbereichen ein elastisches Verhalten aufweist.

18. Kluppenhebel-Betätigungsvorrichtung nach einem der Ansprüche 1 bis 17, **dadurch gekennzeichnet**, daß die Magnete (25) aus Permanentmagneten bestehen.

19. Kluppenhebel-Betätigungsvorrichtung nach einem der Ansprüche 1 bis 18, **dadurch gekennzeichnet**, daß die Magnete (25) aus Elektromagneten oder aus Elektro- und Permanentmagneten bestehen.

20. Kluppenhebel-Betätigungsvorrichtung nach Anspruch 19, **dadurch gekennzeichnet**, daß die Elektromagnete (25) mit permanentem Strom oder mit Impulserregung betreibbar sind.

## Claims

1. Magnetic tenter lever actuating device like a tenter opener/closer for a transport device for a moving material web, in particular a stretching system for plastic film webs, having a tenter lever (3) which is mounted such that it can pivot about an axis (17) on a tenter body (1) and is provided with a coupling section (29), and having a coupling rail (21) which runs at least over a partial distance of the total circulation path of the tenter body (1), a magnetic coupling for pivoting the tenter lever (3) as a function of the course of the coupling rail (21) being present between the coupling rail (21) and the coupling section (29) formed on the tenter lever (3), said coupling section being separated from the coupling rail (21) by an air gap or a distance (D), characterized by the following features
- the magnetic actuating device for the tenter lever (3) further includes a safety device for actuating the tenter lever (3),
- the safety device comprises a mechanically acting redundant system for the forcible opening and/or closing of the tenter lever (3) in the event of the failure or ineffectiveness of the magnetically [sic] actuating device,
- the safety device is arranged and designed such that, when an opening and/or closing movement is to be carried out, by means of the safety device the tenter lever (3) can be pivoted mechanically, at least in its first opening pivoting range, out of its closed position or, at least in its final pivoting range, into its closed position.

2. Magnetic tenter lever actuating device according to Claim 1, characterized in that the safety device comprises a mechanical rail (45) which runs parallel to the coupling rail (21) and is arranged offset to the coupling rail (21) in such a way that the tenter lever (3), in the event of failed or insufficient magnetic coupling, strikes against this mechanical rail (45) and can be pivoted into its respective other pivoting position.

3. Magnetic tenter lever actuating device according to Claim 1 or 2, the coupling rail (21) being designed as a pole shoe rail (21) which includes two pole shoe rail sections (23) arranged laterally offset with respect to each other whilst accommodating magnets (25) arranged between them in the manner of a sandwich, and a coupling section (29) being formed on the tenter lever (3) as magnetic return path, characterized in that the thickness of the pole shoe rail sections (23) increases in the direction of the tenter lever (3).

4. Tenter lever actuating device according to Claim 3, characterized in that the pole shoe rail sections (23) are designed with a cross-section increasing conically in the direction of the tenter lever (3).

5. Tenter lever actuating device according to Claim 3 or 4, characterized in that the pole shoe rail sections (23) are shaped with a trapezoidal to triangular cross-section.

6. Tenter lever actuating device according to one of Claims 3 to 5, characterized in that the coupling section (29) which is formed adjacent to the pole shoe rail (21) and forms the magnetic return path is shaped like a U in cross-section transversely to its pivot axis (17).

7. Tenter lever actuating device according to Claim 6, characterized in that the limb height (T) of the limbs (31) of the coupling section (29) of U-shaped cross-section is about 2 to 10 times, in particular 3 to 8 times, preferably 4 to 6 times, the thickness of the air gap (D) formed between the active surfaces (35) of the pole shoe rail (21) and the active surfaces (37) of the coupling section (29).

8. Tenter lever actuating device according to Claim 6 or 7, characterized in that the base (39), connecting the two limbs (31), of the coupling section (29) has a thickness which corresponds to about 0.5 to 2 times the limb height (T), in particular 0.75 to 1.5 times, preferably 1 to 1.2 times, the limb height (T).

9. Tenter lever actuating device according to one of Claims 6 to 8, characterized in that the limb thickness (Bs) of the limbs (31) is at least slightly less than the maximum thickness of the pole shoe rail sections (23).

10. Tenter lever actuating device according to Claim 9, characterized in that the limb thickness (Bs) of the limbs (31) corresponds to about 0.5 to 0.9 times, in particular 0.8 to 0.9 times, the maximum thickness of the pole shoe rail sections (23).

11. Tenter lever actuating device according to one of Claims 3 to 10, characterized in that the magnets (25) are arranged between the two pole shoe rail sections (23) such that the magnets (25) or their magnetic core region projects [sic] beyond the upper edge of the pole shoe rail sections (23) on the side facing away from the tenter lever (3).

12. Tenter lever actuating device according to Claim 11, characterized in that the magnets (25) project beyond the height (H) of the pole shoe rail (21) by at least 5%, preferably by at least 10%, in particular by 10 to 20%, preferably about 15%.

13. Tenter lever actuating device according to the precharacterizing clause of Claim 1 or one of Claims 1 to 12, characterized in that, moreover, an escape device (61) is provided, by means of which the pole shoe rail (21) can be moved away from the coupling region of the tenter levers (3).

14. Tenter lever actuating device according to Claim 13, characterized in that the escape device (61) can be pivoted by means of levers (63, 63').

15. Tenter lever actuating device according to Claim 13 or 14, characterized in that the pole shoe rail (21) can be moved away from the tenter levers (3) counter to the force of gravity by means of the escape device (61).

16. Tenter lever actuating device according to one of Claims 13 to 15, characterized in that the escape device (61) comprises a parallel guide (63, 63').

17. Tenter lever actuating device according to one of Claims 1 to 16, characterized in that the mechanical rail (45) exhibits resilient behavior in subregions.

18. Tenter lever actuating device according to one of Claims 1 to 17, characterized in that the magnets (25) comprise permanent magnets.

19. Tenter lever actuating device according to one of Claims 1 to 18, characterized in that the magnets (25) comprise electromagnets or electromagnets and permanent magnets.

20. Tenter lever actuating device according to Claim 19, characterized in that the electromagnets (25) can be operated with continuous power or with pulse excitation.

## Revendications

1. Dispositif d'actionnement magnétique pour leviers de pince, à la manière d'un dispositif d'ouverture/fermeture à pinces, pour un dispositif de transport d'une nappe de matière en déplacement, en particulier une installation d'étirage pour des nappes de film en matière plastique, comportant un levier de pince (3) monté en pivotement autour d'un axe (17) sur un corps de pince (1) et pourvu d'un tronçon d'accouplement (29), et comportant un rail d'accouplement (21) qui s étend du moins sur une partie du trajet de la trajectoire totale des corps de pince (1), dans lequel est prévu, entre le rail d'accouplement (21) et le tronçon d'accouplement (29) réalisé sur le levier de pince (3) et séparé du rail d'accouplement (21) par un entrefer ou par un intervalle (D), un accouplement magnétique pour faire pivoter le levier de pince (3) en fonction du tracé du rail d'accouplement (21), caractérisé par les éléments suivants :
- le dispositif d'actionnement magnétique pour le levier de pince (3) comprend en outre un dispositif de sécurité pour actionner le levier de pince (3),
- le dispositif de sécurité est constitué par un système mécanique redondant pour l'ouverture et/ou la fermeture forcée du levier de pince (3) lors d'une défaillance et/ou d'un non-fonctionnement du dispositif d'actionnement magnétique,
- le dispositif de sécurité est agencé et réalisé de telle sorte que dans le cas d'un mouvement d'ouverture et/ou de fermeture à effectuer, le levier de pince (3) est susceptible de pivoter mécaniquement du moins dans sa première zone de pivotement d'ouverture hors de sa position de fermeture ou du moins dans sa zone de pivotement finale jusque dans sa position de fermeture au moyen du dispositif de sécurité.

2. Dispositif d'actionnement magnétique pour leviers de pince selon la revendication 1, caractérisé en ce que le dispositif de sécurité est constitué par un rail mécanique (45) qui s'étend parallèlement au rail d'accouplement (21) et qui est agencé en décalage par rapport au rail d'accouplement (21), de telle sorte que le levier de pince (3) bute contre ce rail mécanique (45) lors d'une défaillance ou d'un accouplement magnétique insuffisant et est susceptible de pivoter dans son autre position de pivotement respective.

3. Dispositif d'actionnement magnétique pour leviers de pince selon l'une ou l'autre des revendications 1 et 2, dans lequel le rail d'accouplement (21) est réalisé sous forme d'un rail polaire (21) qui comprend deux tronçons de rail polaires (23) situés en décalage latéral l'un par rapport à l'autre avec réception en sandwich d'aimants interposés (25), et dans lequel un tronçon d'accouplement (29) est réalisé comme bouclage magnétique sur le levier de pince (3), caractérisé en ce que l'épaisseur des tronçons de rail polaires (23) augmente en direction du levier de pince (3).

4. Dispositif d'actionnement magnétique pour leviers de pince selon la revendication 3, caractérisé en ce que les tronçons de rail polaires (23) sont réalisés avec une section conique qui s'agrandit en direction du levier de pince (3).

5. Dispositif d'actionnement magnétique de leviers à pince selon l'une ou l'autre des revendications 3 et 4, caractérisé en ce que les tronçons de rail polaires (23) sont réalisés avec une section passant d'une forme trapézoïdale à triangulaire.

6. Dispositif d'actionnement magnétique pour leviers de pince selon l'une quelconque des revendications 3 à 5, caractérisé en ce que le tronçon d'accouplement (29) réalisé au voisinage du rail polaire (21) et formant la fermeture du bouclage magnétique présente une section en forme de U transversalement à son axe de pivotement (17).

7. Dispositif d'actionnement magnétique pour leviers de pince selon la revendication 6, caractérisé en ce que la hauteur (T) du côté (31) du tronçon d'accouplement (29) de section en forme de U s'élève approximativement à 2 à 10 fois, en particulier à 3 à 8 fois, de préférence à 4 à 6 fois l'épaisseur de l'entrefer (D) réalisé entre les surfaces actives (35) du rail polaire (21) et les surfaces actives (37) du tronçon d'accouplement (29).

8. Dispositif d'actionnement magnétique pour leviers de pince selon l'une ou l'autre des revendications 6 et 7, caractérisé en ce que la base (39) du tronçon d'accouplement (29) qui relie les deux côtés (31) présente une épaisseur qui correspond approximativement à 0,5 à 2 fois la hauteur (T) du côté, en particulier à 0,75 à 1,5 fois, de préférence à 1 à 1,2 fois la hauteur (T) du côté.

9. Dispositif d'actionnement magnétique pour leviers de pince selon l'une quelconque des revendications 6 à 8, caractérisé en ce que l'épaisseur (Bs) des côtés (31) est du moins légèrement inférieure à l'épaisseur maximale des tronçons de rail polaires (23).

10. Dispositif d'actionnement magnétique pour leviers de pince selon la revendication 9, caractérisé en ce que l'épaisseur (Bs) des côtés (31) correspond approximativement à 0,5 à 0,9 fois, en particulier à 0,8 à 0,9 fois l'épaisseur maximale des tronçons de rail polaires (23).

11. Dispositif d'actionnement magnétique pour leviers de pince selon l'une quelconque des revendications 3 à 10, caractérisé en ce que les aimants (25) entre les deux tronçons de rail polaires (23) sont agencés de telle sorte que les aimants (25) ou leur zone de noyau magnétique dépasse(nt) l'arête supérieure des tronçons de rail polaires (23) sur la face détournée du levier de pince (3).

12. Dispositif d'actionnement magnétique pour leviers de pince selon la revendication 11, caractérisé en ce que les aimants (25) dépassent la hauteur (H) du rail polaire (21) d'au moins 5 %, de préférence d'au moins 10 %, en particulier de 10 à 20 %, de préférence d'environ 15 %.

13. Dispositif d'actionnement magnétique pour leviers de pince selon le préambule de la revendication 1 ou selon l'une quelconque des revendications 1 à 12, caractérisé en ce qu'il est prévu en outre un dispositif de déviation (61) au moyen duquel le rail polaire (21) peut être déplacé en éloignement de la zone d'accouplement des leviers de pince (3).

14. Dispositif d'actionnement magnétique pour leviers de pince selon la revendication 13, caractérisé en ce que le dispositif de déviation (61) est susceptible de pivoter au moyen de leviers (63, 63').

15. Dispositif d'actionnement magnétique pour leviers de pince selon l'une ou l'autre des revendications 13 et 14, caractérisé en ce que le rail polaire (21) est susceptible d'être déplacé en éloignement des leviers de pince (3) au moyen du dispositif de déviation (61) à l'encontre de la pesanteur.

16. Dispositif d'actionnement magnétique pour leviers de pince selon l'une quelconque des revendications 13 à 15, caractérisé en ce que le dispositif de déviation (61) est constitué par un guidage parallèle (63, 63').

17. Dispositif d'actionnement magnétique pour leviers de pince selon l'une quelconque des revendications 1 à 16, caractérisé en ce que le rail mécanique (45) présente dans des zones partielles un comportement élastique.

18. Dispositif d'actionnement magnétique pour leviers de pince selon l'une quelconque des revendications 1 à 17, caractérisé en ce que les aimants (25) sont constitués par des aimants permanents.

19. Dispositif d'actionnement magnétique pour leviers de pince selon l'une quelconque des revendications 1 à 18, caractérisé en ce que les aimants (25) sont constitués par des électro-aimants, ou bien à la fois par des électro-aimants et des aimants permanents.

20. Dispositif d'actionnement magnétique pour leviers de pince selon la revendication 19, caractérisé en ce que les électro-aimants (25) peuvent être alimentés en courant permanent ou être excités par impulsions.
